# EUROPÄISCHE PATENTSCHRIFT

(11) **EP 0 930 007 B1**
(45) Veröffentlichungstag und Bekanntmachung des Hinweises auf die Patenterteilung: **28.07.2004**
(21) Anmeldenummer: 99100775.8
(22) Anmeldetag: 16.01.1999
(51) Int. Cl.: A01K 13/00, A61D 9/00

(54) **Schutzschuh für die Pfote eines Hundes**
Protecting shoe for a dog's legs
Chaussure de protection pour les pattes d'un chien

(30) Priorität: 17.01.1998 DE 29800774 U; 25.04.1998 DE 29807500 U
(43) Veröffentlichungstag der Anmeldung: 21.07.1999
(73) Patentinhaber: Brockmann, Sandra, 21256 Handeloh (DE); Knuth, Arne, 21256 Handeloh (DE)
(72) Erfinder: Brockmann, Sandra, 21256 Handeloh (DE); Knuth, Arne, 21256 Handeloh (DE)
(74) Vertreter: Jaeschke, Rainer, Dipl.-Ing.

(56) Entgegenhaltungen:
- EP-A- 0 037 745
- DE-U- 29 706 992
- US-A- 4 543 911

## Beschreibung

Die Erfindung betrifft einen Schutzschuh für die Pfote eines Hundes, welcher Schutzschuh im wesentlichen strumpfförmig ausgebildet ist und aus einem Material mit zumindest zwei Schichten besteht.

Ein solcher Schutzschuh dient zum einen dazu, den Verband einer Pfote bei eventuellen Verletzungen vor Nässe und Durchfeuchtung von außen zu schützen. Zum anderen dient der Schutzschuh zum Schutz der Pfote gegen äußeres Einflüsse durch chemische Substanzen, scharfe Gegenstände oder dergleichen. Solchen besonderen Beanspruchungen sind beispielsweise Polizei- und Zolldiensthunde oder Hunde einer Rettungsstaffel ausgesetzt.

Ein derartiger Schutzschuh ist beispielsweise aus dem DE-U 295 08 928.8 bekannt. Dieser Schutzschuh besteht aus einer Baumwollsocke, die in eine Kunststofflösung eingetaucht wird. Die dadurch gebildete Außenhaut ist vollkommen wasserdicht, aber auch nicht atmungsaktiv. Dies hat den Nachteil, daß die Körperfeuchte des Hundes nicht nach außen gelangen kann. Ein eventueller Verband wird somit ebenfalls feucht, und der Heilungsprozeß wird verhindert oder verzögert. Ein anderer Nachteil ist darin zusehen, daß die Außenhaut lediglich biegsam und nicht dehnbar ist. Zusammen mit der Befestigung des Schutzschuhs mittels umlaufender Riemen kann dies zu einer Überbeanspruchung insbesondere der hinteren Sehne des Laufes führen.

In der DE-U-297 06 992 wird Schutzschuh beschrieben, der aus einem atmungsaktiven Material besteht und mittels eines Riemens am Lauf gehalten wird. Atmungsaktive Materialen sind beipsielsweise durch die EP-A-0 037 745 bekannt. Die US-A-4,534,911 betrifft einen Schutzschuh für eine Tierpfote, der durch einen festen Riemen am Lauf befestigt wird. Solche Riemen können zur Überbeanspruchung der hinteren Sehne des Laufs führen.

Der Erfindung liegt die Aufgabe zugrunde, einen Schutzschuh so auszubilden, daß ein bequemes und ungehindertes Tragen des Schutzschuhs für den Hund ermöglicht wird.

Die Aufgabe wird gemäß der Erfindung dadurch gelöst, daß die äußere Schicht des Materials aus einem sowohl in Längsals auch in Querrichtung elastisch dehnbaren atmungsaktiven semipermeablen Material besteht, das für Wasser von außen undurchlässig und für Feuchtigkeit von innen durchlässig ist, wobei der Schutzschuh am Lauf des Hundes mittels wenigstens eines Riemens befestigbar ist, der im geschlossenen Zustand den Lauf des Hundes zumindest teilweise umfasst und der zumindest im Bereich der hinteren Sehne eines Laufes mit einem Dehnbereich versehen ist. Dadurch wird erreicht, daß die Sehne des Laufes sich frei spannen kann und nicht durch den Riemen behindert wird. Insbesondere mit der Ausbildung eines Schuhes mit dem elastisch dehnbaren Material sowohl in Längs- als auch in Querrichtung wird ein Schutzschuh geschaffen, der einen optimalen Halt bei gleichzeitiger ungehinderter Bewegungsfreiheit des Laufes bzw. der betroffenen Sehne bietet. Diese Ausbildung des Schutzschuhes hat den ferner Vorteil, daß die Pfote und/oder der Verband von außen gegen eindringende Feuchtigkeit geschützt ist. Dennoch kann die Körperfeuchte von innen nach außen gelangen.

Weiterhin besteht ein Vorteil darin, daß durch die elastische Dehnbarkeit sowohl in Längsrichtung als auch in Querrichtung ein Überziehen des Schutzschuhes über die Pfote und/oder den Verband erleichtert wird.

Gemäß einer Ausführungsform der Erfindung ist vorgesehen, daß die äußere Schicht Polytetrafluorethylen (PTFE) aufweist. Die der Pfote zugekehrten innere Schicht kann aus einem weichen fliesartigen Stoff sein. Durch die Verwendung dieses Materials können die gewünschten Eigenschaften erreicht werden. Das Material der inneren Schicht kann beispielsweise aus einem Kunststoffflies bestehen.

Gemäß einer weiteren Ausführungsform der Erfindung ist vorgesehen, daß das Material eine Schicht aus Chloropren-Kautschuk aufweist, die zumindest einseitig mit einer Nylon-Schicht versehen ist (Neoprene ®). Vorzugsweise ist die Chloropren-Kautschuk-Schicht beidseitig mit Nylon beschichtet. Dadurch wird ebenfalls ein atmungsaktives Material geschaffen, das zudem äußerst eleastisch ist und den Hund nicht behindert.

Es kann zweckmäßig sein, wenn die äußere Schicht im Bereich der Sohle mit einem Granulat versehen ist derart, daß die Dehnbarkeit des Materials nicht oder nur unwesentlich verringert ist. Dadurch erhält der Hund beim Gehen oder Laufen einen ausreichenden rutschsicheren Halt. Durch die beibehaltene elastische Dehnbarkeit auch im Bereich der beschichteten Sohle behält der Hund ein sicheres Auftrittsgefühl.

Auch kann vorgesehen werden, wenn die äußere Schicht im Bereich der Sohle mit einer gummiartigen Verstärkungsschicht, die Profilierungen aufweisen kann, versehen ist. Dadurch wird das Laufgefühl des Hundes ebenfalls nicht beeinflußt. Ferner entstehen keine störenden Laufgeräusche beim Laufen auf Asphalt oder dergleichen. Die Verstärkungsschicht kann beispielsweise auf der äußeren Schicht auflaminiert sein.

Insbesondere hierbei ist es zweckmäßig, wenn die Verstärkungsschicht auch durch Blindnähte mit der äußeren Schicht verbunden ist. Grundsätzlich ist es natürlich auch möglich, alle Schichten mit solchen Blindstichnähten zu verarbeiten. Die Blindstichnähte durchdringen das Material nicht vollständig. Vielmehr wird der Stich nur bis zu Mitte der außenliegenden Materialschicht geführt. Dies hat den Vorteil, daß keine undichte Stellen durch die Naht erzeugt werden. Ferner sind die Blindstichnähte elastisch, so daß der starken Belastung standgehalten wird.

Es kann vorgesehen werden, daß der Dehnbereich durch einen dehnbaren Abschnitt des Riemens gebildet wird. Auch kann der Dehnbereich als eine Falte im Riemen ausgebildet sein, die in diesem Bereich nicht mit dem Schutzschuh verbunden ist. Zweckmäßig kann es auch sein, wenn im wesentlichen der gesamte Riemen elastisch ausgebildet ist. Dadurch wird ebenfalls eine ausreichende Dehnbarkeit im Bereich der hinteren Sehne bewirkt.

Besonders zweckmäßig ist es jedoch, wenn der Dehnbereich als eine Unterbrechung des Riemens in diesem Bereich ausgebildet ist. Die erforderliche Dehnbarkeit wird dann durch die Dehnbarkeit des verwendeten Materials bestimmt. Diese Ausbildung des Dehnbereichs ist besonders einfach herzustellen.

Grundsätzlich ist die Art des Verschlusses des Riemens beliebig. Zweckmäßig ist es jedoch, wenn der Riemen einen Klettverschluß aufweist. Ein Klettverschluß ist relativ unempfindlich gegen Nässe und Verschmutzungen und kann schnell verschlossen und gelöst werden. Ferner wird der Hund nicht durch Schnallen oder dergleichen behindert. Gemäß einer weiteren Ausführungsform der Erfindung ist vorgesehen, daß der Schaft des Schuhs durch wenigstens einen Reißverschluß zumindest teilweise geöffnet werden kann. Dieser Reißverschluß kann auf seiner der Pfote zugekehrten Seite durch eine flexible Abdeckung überdeckt sein. Dadurch kann das Überstreifen des Schutzschuhs auf die eventuell schmerzende Pfote erleichtert werden.

Die Erfindung wird im folgenden anhand der schematischen Zeichnung näher erläutert. Es zeigen:
- Fig. 1: die Ansicht eines Hinterlaufes eines Hundes mit einem Schutzschuh gemäß der Erfindung,
- Fig. 2: in vergrößerter Darstellungsform den Dehnbereich des Riemens,
- Fig. 3: einen Querschnitt durch den Schutzschuh im Bereich eines Riemens und
- Fig. 4: einen Querschnitt durch den Schutzschuh im Bereich des Reißverschlusses..

Der in der Zeichnung dargestellte Schutzschuh 11 für einen Lauf 12 des Hundes ist im wesentlichen strumpfförmig ausgebildet, so daß er bequem über die Pfote gezogen werden kann. Der Schutzschuh wird über zwei Riemen 13, 14 an dem Lauf befestigt. Die Riemen können beispielsweise mit einem Klettverschluß versehen sein. Der Riemen 13 ist unmittelbar oberhalb des Kniegelenks 15 und der Riemen 14 unmittelbar oberhalb des Fußgelenkes 16 angeordnet. Hierdurch wird ein fester Halt bewirkt.

Der Schutzschuh 11 ist zweischichtig aufgebaut. Die der Pfote zugekehrte innere Schicht 24 kann ein weiches, elastisches fliesartiges Material aufweisen. Die äußere Schicht 25 besteht aus einem sowohl in Längsrichtung 17 als auch in Querrichtung 18 elastischen semipermeablen Material. Diese Schicht 25 ist so ausgebildet, daß ein Eindringen von Wasser vermieden wird. Dennoch ist die Schicht atmungsaktiv, so daß Feuchtigkeit von Innen nach außen gelangen kann. In der Zeichnung ist ein zweischichtiger Aufbau dargestellt. Es kann aber auch ein dreischichtiger Aufbau möglich. Die mittlere Schicht kann dann beispielsweise aus einem Chloropren-Kautschuk bestehen, die beidseitig mit Nylon beschichtet ist.

Das Material der äußeren Schicht 25 ist so gewählt, daß der Schutzschuh eine gewisse Formsteifigkeit aufweist, so daß ein Zusammensacken des Schuhs vermieden wird. Durch die Formsteifigkeit des Schutzschuhes bleibt dieser in einer im wesentlichen aufrechten Lage und wird durch die Elastizität des äußeren Materials teilweise selbst auch ohne die Riemen am Lauf gehalten. Ein versehentliches Abrutschen auch bei gelöstem Riemen wird somit erschwert.

Der Riemen besteht in der Regel aus einem unelastischen Material, beispielsweise einem Textilband, das mit einem Klettverschluß versehen ist. Dieses Textilband ist in der Regel mit dem Schutzschuh vernäht oder mit der äußeren Schicht verklebt. Um die erforderliche Dehnbarkeit des Schutzschuhes im Bereich 19, 20 der hinteren Sehne eines Laufes zu erzielen, weist der Riemen 13, 14 dort eine Unterbrechung 21 auf. Hierdurch wird in einfacher Weise bewirkt, daß sich die Sehne frei spannen kann, ohne daß der Halt des Schutzschuhs an der Pfote beeinträchtigt wird. Ein Sehnenschaden auch bei längerem oder regelmäßigem Gebrauch des Schutzschuhs wird somit vermieden. Grundsätzlich ist es aber auch möglich, elastische Riemen mit Klettverschluß einzusetzen. Der Riemen ist vorzugsweise im Bereich außerhalb des Klettverschlusses weicher, so daß eine Überbeanspruchung der Sehne ebenfalls nicht zu befürchten ist.

Der Schutzschuh weist ferner im Bereich der Sohle 22 eine Granulatbeschichtung 23 auf, die auf die äußere Schicht derart aufgebracht ist, daß die elastische Dehnbarkeit dieser Schicht nicht beeinflußt wird. Hierdurch wird zum einen ein Rutschen der Pfote beim Laufen des Hundes vermieden. Zum anderen behält der Hund durch die bleibende Elastizität das Gefühl für den Untergrund, auf dem er gerade steht.

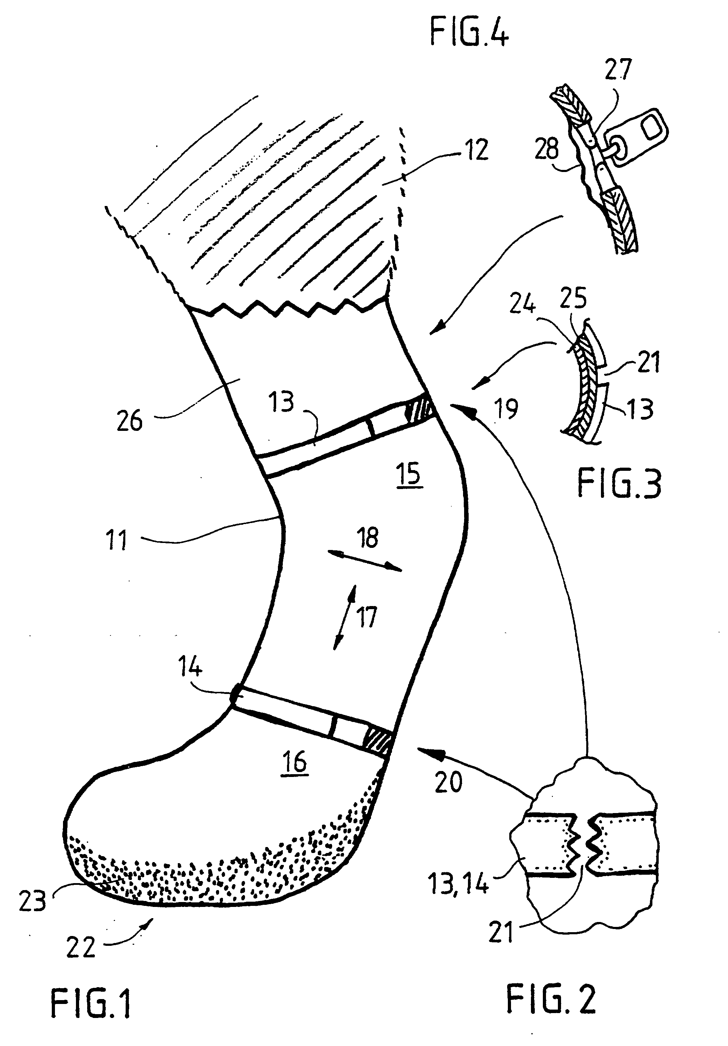

Bei dem in Fig. 4 gezeigten Ausführungsbeispiel ist der Schaft 26 des Schutzschuhs mit einem im wesentlichen von oben nach unten verlaufenden Reißverschluß 27 versehen. Der Reißverschluß ist auf der Innenseite des Schuhs mit einer Abdeckung 28 überdeckt, so daß ein Einklemmen der Haare nicht zu befürchten ist. Ferner kann diese Abdeckung wasserundurchlässig ausgebildet sein, so daß ein Eindringen von Feuchtigkeit durch den Reißverschluß vermieden wird. Der Reißverschluß ist vorzugsweise oben im hinteren Beriech des Schutzschuhs angeordnet. Grundsätzlich kann der Reißverschluß aber auch vorne oder seitlich am Schaft angeordnet sein.

In der Zeichnung ist ein hoher Schutzschuh dargestellt. Es ist selbstverständlich auch möglich, nur einen niedrigen Schuh vorzusehen, der sich nur über den ersten Knöchel erstreckt. In diesem Fall müßte nur ein Riemen oberhalb des Fußgelenkes vorgesehen werden.

Es ist selbstverständlich, daß der Schutzschuh auch für eine Vorderpfote benutzt werden kann. Hierbei wird der Schuh jedoch eine andere Paßform aufweisen, um einen guten Halt zu bewirken, ohne daß der Hund beim Laufen oder Gehen behindert wird. Es ist offensichtlich, daß mit solchen Schutzschuhen ein bequemer Geh- oder Verbandsschutz geschaffen wird, der den Hund nicht oder nur unwesentlich beeinträchtigt.

## Patentansprüche

1. Schutzschuh (11) für die Pfote eines Hundes, welcher Schutzschuh im wesentlichen strumpfförmig ausgebildet ist und aus einem Material mit zumindest zwei Schichten besteht, **dadurch gekennzeichnet, dass** die äußere Schicht (25) aus einem sowohl in Längs- als auch in Querrichtung elastisch dehnbaren atmungsaktiven semipermeablen Material besteht, das für Wasser von außen undurchlässig und für Feuchtigkeit von innen durchlässig ist, und dass der Schutzschuh am Lauf des Hundes mittels wenigstens eines Riemens (13, 14) befestigbar ist, der im geschlossenen Zustand den Lauf des Hundes zumindest teilweise umfasst und der zumindest im Bereich (19, 20) der hinteren Sehne eines Laufes mit einem Dehnbereich (21) versehen ist.

2. Schutzschuh nach einem der Ansprüche 1, **dadurch gekennzeichnet, dass** die äußere Schicht (25) Polytetrafluorethylen (PTFE) aufweist und die der Pfote zugekehrten innere Schicht (24) aus einem weichen fliesartigen Stoff besteht.

3. Schutzschuh nach einem der Ansprüche 1 oder 2, **dadurch gekennzeichnet, dass** das Material mit einer Schicht aus einem Chloropren-Kautschuk aufweist, die zumindest einseitig, vorzugsweise beidseitig, mit einer Nylon-Schicht versehen ist (Neoprene ®).

4. Schutzschuh nach einem der Ansprüche 1 bis 3, **dadurch gekennzeichnet, dass** der Dehnbereich durch einen dehnbaren Abschnitt des Riemens gebildet wird.

5. Schutzschuh nach einem der Ansprüche 1 bis 3, **dadurch gekennzeichnet, dass** der Dehnbereich als eine Unterbrechung (21) des Riemens in diesem Bereich ausgebildet ist.

6. Schutzschuh nach einem der Ansprüche 1 bis 3, **dadurch gekennzeichnet, dass** der Dehnbereich als eine Falte im Riemen ausgebildet ist, die in diesem Bereich nicht mit dem Schutzschuh verbunden ist.

7. Schutzschuh nach einem der Ansprüche 1 bis 3, **dadurch gekennzeichnet, dass** im wesentlichen der gesamte Riemen elastisch ausgebildet ist.

8. Schutzschuh nach einem der Ansprüche 1 bis 7, **dadurch gekennzeichnet, dass** der Riemen einen Klettverschluss aufweist.

9. Schutzschuh nach einem der Ansprüche 1 bis 8, **dadurch gekennzeichnet, dass** ein Riemen (14) oberhalb des Fußgelenks (16) der Pfote verläuft.

10. Schutzschuh nach einem der Ansprüche 1 bis 9, **dadurch gekennzeichnet, dass** ein Riemen (13) oberhalb des Kniegelenks (15) der Pfote verläuft.

11. Schutzschuh nach einem der Ansprüche 1 bis 10, **dadurch gekennzeichnet, dass** der Schaft (26) des Schuhs durch wenigstens einen Reißverschluss (27) zumindest teilweise geöffnet werden kann.

12. Schutzschuh nach Anspruch 11, **dadurch gekennzeichnet, dass** der Reißverschluss auf seiner der Pfote zugekehrten Seite durch eine flexible Abdeckung (28) überdeckt ist.

13. Schutzschuh nach Anspruch 12, **dadurch gekennzeichnet, dass** die Abdeckung (28) wasserundurchlässig ist.

14. Schutzschuh nach einem der Ansprüche 1 bis 13, **dadurch gekennzeichnet, dass** die äußere Schicht (25) im Bereich der Sohle (22) mit einem Granulat (23) versehen ist derart, dass die Dehnbarkeit des Materials nicht oder nur unwesentlich verringert ist.

15. Schutzschuh nach einem der Ansprüche 1 bis 14, **dadurch gekennzeichnet, dass** die äußere Schicht im Bereich der Sohle mit einer gummiartigen Verstärkungsschicht, die Profilierungen aufweisen kann, versehen ist.

## Revendications

1. Chaussure de protection (11) pour la patte d'un chien, dont la chaussure de protection est formée essentiellement en forme d'un bas et qui consiste d'un matériel d'au moins deux couches, **caracterisé par le fait que** la couche extérieure (25) consiste d'un matériel respiratoire sémiperméable et élastiquement extensible non seulement en direction longitudinale mais aussi transversale, qui est imperméable à l'eau par l'extérieur et perméable à l'humidité de l'intérieur, et **par le fait que** la chaussure de protection peut être fixée sur la jambe du chien par au moins une courroie (13, 14), qui en état fermé enserre au moins partiellement la jambe du chien et qui est munie d'une zone élastique (21) au moins dans le domaine (19, 20) du tendon arrière d'une jambe.

2. Chaussure de protection selon l'une des revendications 1, **caractérisée par le fait que** la couche extérieure (25) offre du polytetrafluoréthylène (PTFE) et que la couche intérieure (24) tournée vers la patte consiste d'un tissu mou d'une espèce de fleece.

3. Chaussure de protection selon l'une des revendications 1 ou 2, **caractérisée par le fait que** le matériel offre une couche d'un caoutchouc chloroprène qui est équipée, au moins d'un côté, mais de préférence des deux côtés, d'une couche de nylon (Néoprène ^{.}).

4. Chaussure de protection selon l'une des revendications 1 à 3, **caractérisée par le fait que** la zone élastique est formée par une section élastique de la courroie.

5. Chaussure de protection selon l'une des revendications 1 à 3, **caractérisée par le fait que** la zone élastique est formée en tant qu'une interruption (21) de la courroie dans ce domaine.

6. Chaussure de protection selon l'une des revendications 1 à 3, **caractérisée par le fait que** la zone élastique est formée en tant qu'un pli dans la courroie, qui dans ce cas là, n'est pas relié à la chaussure de protection.

7. Chaussure de protection selon l'une des revendications 1 à 3, **caractérisée par le fait que** pour l'essentiel la courroie complète est formée élastiquement.

8. Chaussure de protection selon l'une des revendications 1 à 7, **caractérisée par le fait que** la courroie offre une bande agrippante.

9. Chaussure de protection selon l'une des revendications 1 à 8, **caractérisée par le fait qu'**une courroie (14) s'étend au dessus du cou-de-pied (16) de la patte.

10. Chaussure de protection selon l'une des revendications 1 à 9, **caractérisée par le fait qu'**une courroie (13) s'étend au dessus de la jointure du genou (15) de la patte.

11. Chaussure de protection selon l'une des revendications 1 à 10, **caractérisée par le fait que** la tige (26) de la chaussure peut être ouverte du moins partiellement par une fermeture à glissière (27) au minimum.

12. Chaussure de protection selon la revendication 11, **caractérisée par le fait que** la fermeture à glissière est couverte par un recouvrement flexible (28) à son côté tourné vers la patte.

13. Chaussure de protection selon la revendication 12, **caractérisée par le fait que** le recouvrement (28) est imperméable à l'eau.

14. Chaussure de protection selon l'une des revendications 1 à 13, **caractérisée par le fait que** la couche extérieure (25) dans le domaine de la semelle (22) est assortie d'un granulé (23) de sorte que l'élasticité du matériel ne soit pas réduite du tout ou que très peu.

15. Chaussure de protection selon l'une des revendications 1 à 14, **caractérisée par le fait que** la couche extérieure dans le domaine de la semelle est assortie d'une couche de renforcement caoutchouteux qui peut montrer des sculptures.

## Claims

1. Protection shoe (11) for the paw of a dog, whereby this protection shoe is substantially formed like a sock and made of a material with at least two layers **characterised in that** the outer layer (25) consists of an elastic extendible both to length and cross direction and breathable semi-permeable material which is impermeable for water from outside and permeable for humidity from inside and that the protection shoe can be fixed with at least one belt (13, 14) on the ankle joint of the dog and that this belt covers the ankle joint of the dog at least partially when closed and which is equipped with an extendible zone (21) at least in the area (19, 20) of the rear tendon of an ankle joint.

2. Protection shoe according to one of the claims 1 **characterised in that** the outer layer (25) comprises polytetrafluoroethylene (PTFE) and that the inner layer (24) turned to the direction of the paw consists of a smooth, fleece-like material.

3. Protection shoe according to one of the claims 1 and 2 **characterised in that** the material with one layer comprises a chloroprene-caoutchouc which is provided with a nylon-layer (Neoprene®) at least on one side, preferably on both sides.

4. Protection shoe according to one of the claims 1 to 3 **characterised in that** the extendible zone is formed by an extendible section of the belt.

5. Protection shoe according to one of the claims 1 to 3 **characterised in that** the extendible zone is formed as an interruption (21) of the belt in this area.

6. Protection shoe according to one of the claims 1 to 3 **characterised in that** the extendible zone is formed as a fold in the belt which is not connected with the protection shoe in this area.

7. Protection shoe according to one of the claims 1 to 3 **characterised in that** the complete belt is basically made elastic.

8. Protection shoe according to one of the claims 1 to 7 **characterised in that** the belt is featured with a Velcro® fastener.

9. Protection shoe according to one of the claims 1 to 8 **characterised in that** a belt (14) runs above the ankle-joint (16) of the paw.

10. Protection shoe according to one of the claims 1 to 9 **characterised in that** a belt (13) runs above the knee-joint (15) of the paw.

11. Protection shoe according to one of the claims 1 to 10 **characterised in that** the bootleg (26) can be opened at least partially by at least one zipper (27).

12. Protection shoe according to one of the claims 1 to 11 **characterised in that** the zipper is covered by a flexible cover (28) on that side which is directed to the paw.

13. Protection shoe according to one of the claims 1 to 12 **characterised in that** the cover (28) is waterproof.

14. Protection shoe according to one of the claims 1 to 13 **characterised in that** the outer layer (25) is provided with a granulate material (23) in such a manner that the extensibility of the material is not or only insignificantly reduced.

15. Protection shoe according to one of the claims 1 to 14 **characterised in that** the outer layer in the area of the sole is provided with a gummy bracing layer which shows profiles.
